# EUROPÄISCHE PATENTSCHRIFT

(11) **EP 2 646 377 B1**
(45) Veröffentlichungstag und Bekanntmachung des Hinweises auf die Patenterteilung: **08.08.2018**
(21) Anmeldenummer: 11788094.8
(22) Anmeldetag: 10.11.2011
(51) Int. Cl.: C03C 1/10, C03C 3/06, C03C 4/02, C03C 4/08, H01J 61/30, H01K 1/32, H01J 61/34

(54) **GLASARTIKEL FÜR LAMPENBAU**
GLASS ARTICLE FOR LAMP CONSTRUCTION
ARTICLE EN VERRE POUR LA FABRICATION DE LAMPES

(30) Priorität: 30.11.2010 DE 102010062193
(43) Veröffentlichungstag der Anmeldung: 09.10.2013
(73) Patentinhaber: OSRAM GmbH, 80807 München (DE)
(72) Erfinder: BENTEN, Wolfgang, 10249 Berlin (DE); BÜTTNER, Olaf, 14199 Berlin (DE); DEISENHOFER, Manfred, 86450 Altenmünster (DE); MURPHY, Thomas, 10555 Berlin (DE)
(86) Internationale Anmeldenummer: PCT/EP2011/069835
(87) Internationale Veröffentlichungsnummer: WO 2012/072398

(56) Entgegenhaltungen:
- US-A- 5 589 734
- US-A1- 2005 272 588
- US-A1- 2007 293 388

## Beschreibung

Die Erfindung betrifft Glasartikel gemäß dem Oberbegriff des Patentanspruchs 1. Insbesondere betrifft die Erfindung Glasartikel, die beim Lampenbau verwendet werden.

### I. Stand der Technik

Ein derartiger Glasartikel ist beispielsweise in der US 2001/0044370 A1 offenbart. Die vorgenannte Schrift beschreibt mehrere Beispiele für Glasartikel zur Verwendung im Lampenbau mit unterschiedlicher Glaszusammensetzung. Die Glasartikel gemäß den Beispielen 5 und 6 bestehen aus Alumosilikatglas, das für Lampenkolben von thermisch weniger stark belasteten Halogenglühlampen, wie beispielsweise Halogenglühlampen der ECE-Kategorie H4, verwendbar ist. Die Glaszusammensetzug gemäß den Beispielen 7 und 8 ist aufgrund ihres Gehalts an Alkalimetalloxiden für Lampengefäße von Halogenglühlampen ungeeignet. Die Glasartikel gemäß den Beispielen 5 bis 8 sind aber für thermisch extrem hoch belastete Lampengefäße, wie beispielsweise dem unmittelbar auf das Entladungsgefäß aufgebrachten Außenkolben einer als Lichtquelle in einem Kraftfahrzeugscheinwerfer dienenden Halogen-Metalldampf-Hochdruckentladungslampe, nicht geeignet. Die Glasartikel gemäß den Beispielen 1 bis 4 besitzen eine Glaszusammensetzung mit einem sehr hohen Anteil an Siliziumdioxid und sind unter dem Markennamen Vycor bekannt. Die Herstellung von Lampengefäßen aus dieser Glassorte ist allerdings aufwendig.

### II. Darstellung der Erfindung

Es ist Aufgabe der Erfindung, Glasartikel bereitzustellen, die thermisch extrem hoch belastbar sind und als Filter für Licht aus dem langwelligen Spektralbereich verwendbar sind.

Die US 5 589 734 offenbart eine Lampe mit einem Lampenkolben aus Quarzglas, das mit UV-Strahlung absorbierenden Dotierstoffen wie beispielsweise Cer versehen ist und zusätzlich mit Praseodym dotiert ist, um eine Fluoreszenz des Lampenkolbens zu vermindern.

### II. Darstellung der Erfindung

Es ist Aufgabe der Erfindung, Glasartikel bereitzustellen, die thermisch extrem hoch belastbar sind und als Filter für Licht aus dem langwelligen Spektralbereich verwendbar sind.

Diese Aufgabe wird erfindungsgemäß durch Glasartikel mit den Merkmalen aus dem Patentanspruch 1 gelöst. Besonders vorteilhafte Ausführungen der Erfindung sind in den abhängigen Patentansprüchen beschrieben.

Der erfindungsgemäße Glasartikel ist geeignet zur Verwendung im Lampenbau. Insbesondere können daraus Außenkolben für als Lichtquelle in Kraftfahrzeugscheinwerfern dienende Halogen-Metalldampf-Hochdruckentladungslampen gefertigt werden. Aufgrund seines sehr hohen Siliziumdioxidanteils besitzt der erfindungsgemäße Glasartikel Eigenschaften ähnlich wie Quarzglas und ist thermisch extrem hoch belastbar. Die erfindungsgemäßen Anteile von Barium und Bor in Oxidform tragen zur Erniedrigung der Viskosität des Glasartikels bei und verbessern die Verarbeitbarkeit des Glasartikels zu Lampengefäßen. Der Anteil von Neodym in Oxidform dient zur Absorption von langwelligem Licht, da Neodym Absorptionsbanden bei den Wellenlängen 524 nm, 582 nm, 744 nm und 804 nm besitzt. Dadurch wird eine Anhebung der Farbtemperatur des von der Lampe emittierten weißen Lichts um ca. 200 Kelvin ermöglicht, wenn der erfindungsgemäße Glasartikel als Lampengefäß dient. Der Anteil von Cer in Oxidform dient zur Absorption von ultravioletter Strahlung und reduziert die Transparenz von aus dem erfindungsgemäßen Glasartikel bestehenden Lampengefäßen im ultravioletten Spektralbereich. Der Anteil von Aluminium dient hauptsächlich fertigungstechnischen Gründen. Sowohl Neodym als auch Cer werden besser als Mischoxid in Form von Neodymaluminat (NdAlO₃) und Ceraluminat (CeAlO₃) dem Glas zugesetzt als in Form von Neodymoxid (Nd₂O₃) und Ceroxid (CeO₂), weil letztere chemisch weniger stabil als die Mischoxide sind und im Schmelzofen Sauerstoff freisetzen können. Außerdem trägt der Anteil von Aluminium in Oxidform zur Verbesserung der Löslichkeit sowohl von Neodym als auch Cer im Glas bei und ermöglicht dadurch ein sehr homogenes Glas.

Obwohl alle Zusatzstoffe im erfindungsgemäßen Glasartikel in Oxidform vorhanden sind, ist bei der Angabe des Wertes für den Gewichtsanteil der Zusatzstoffe der Sauerstoffanteil der Oxidform bei der Ermittlung des Gewichtsanteils nicht berücksichtigt, weil die Zusatzstoffe in unterschiedlichen Oxidformen vorliegen können. Beispielsweise kann der Zusatzstoff Aluminium in den Oxidformen Aluminiumoxid (Al₂O₃), Neodymaluminat (NdAlO₃) oder bzw. und Ceraluminat (CeAlO₃) in das Glas bzw. in die Glasansatzmischung für die Glasschmelze eingebracht sein. Aus diesem Grund wird bei der Angabe des Gewichtsanteils des in Oxidform vorliegenden Aluminiums nur der Anteil des Elements Aluminium, ohne Berücksichtigung des Sauerstoffs der Oxidform, in der Glaszusammensetzung angegeben. Eine analoge Aussage gilt auch für die in Oxidform vorliegenden Zusatzstoffe Neodym und Cer sowie für Barium und Bor. Letztere können beispielsweise als Bariummetaborat (BaB₂O₄) oder in anderer Oxidform in die Glasansatzmischung für die Glasschmelze eingebracht sein.

Die Obergrenzen für die in Oxidform vorliegenden Zusatzstoffe Neodym und Cer in der Glaszusammensetzung des erfindungsgemäßen Glasartikels sind durch die limitierte Löslichkeit von Neodym und Cer im Glas definiert. Höhere Gewichtsanteile dieser Zusatzstoffe können zu inhomogenen Bereichen im Glasartikel führen. Bei einem Gewichtsanteil unterhalb der Untergrenze zeigen diese Zusatzstoffe die gewünschte Wirkung nicht in einem ausreichenden Maß. Die Obergrenzen und Untergrenzen für die in Oxidform vorliegenden Zusatzstoffe Barium und Bor in der Glaszusammensetzung des erfindungsgemäßen Glasartikels sind durch die gewünschte Viskositätserniedrigung und die erforderliche thermische Belastbarkeit des Glasartikels definiert. Höhere Gewichtsanteile dieser Zusatzstoffe können eine zu starke Reduktion der thermischen Belastbarkeit des Glasartikels verursachen, während geringere Gewichtsanteile dieser Zusatzstoffe die Viskosität des Glases nicht weit genug verringern, um eine ausreichend gute Verarbeitbarkeit des Glasartikels zu Lampengefäßen zu ermöglichen.

Die Glaszusammensetzung des erfindungsgemäßen Glasartikels enthält zusätzlich mindestens einen weiteren Zusatzstoff aus der Gruppe von Europium und Titan in Oxidform. Durch den Anteil von Titan in Oxidform kann die Durchlässigkeit des Glasartikels im ultravioletten Spektralbereich, insbesondere für kurzwellige ultraviolette Strahlung, sogenannte UV-C-Strahlung, weiter reduziert werden. Der Anteil von Titan in der Glaszusammensetzung liegt für diesen Zweck vorzugsweise im Bereich von 0,006 bis 0,06 Gewichtsprozent.

Durch den Anteil von Europium in Oxidform kann der Anteil von Neodym in Oxidform in der Glaszusammensetzung für dieselbe Farbtemperaturerhöhung nahezu um ein Drittel reduziert werden, weil Europium blaue Fluoreszenzstrahlung emittiert, die durch in der Lampe generierte UV-Strahlung angeregt wird. Dadurch kann der Anteil von Siliziumdioxid in der Glaszusammensetzung entsprechend höher ausfallen, um eine möglichst hohe thermische Belastbarkeit zu gewährleisten. Außerdem hat der Zusatzstoff Europium in Oxidform den weiteren Vorteil, dass die Transparenz des Glasartikels im ultravioletten Spektralbereich von 200 nm bis 280 nm weiter reduziert wird und auf eine Glühung des Glasartikels in Sauerstoffatmosphäre verzichtet werden kann. Der Anteil von Europium in der Glaszusammensetzung liegt für die oben genannte Zwecke vorteilhafterweise im Bereich von 0,008 bis 0,44 Gewichtsprozent.

Gemäß den besonders bevorzugten Ausführungsformen des erfindungsgemäßen Glasartikels ist der Anteil von Siliziumdioxid (SiO₂) größer als 96 Gewichtsprozent, um einen Glasartikel mit Eigenschaften möglichst ähnlich den Eigenschaften von Quarzglas zu erhalten.

Der erfindungsgemäße Glasartikel ist vorzugsweise als Glasrohr zur Fertigung von Lampengefäßen oder als Lampengefäß, insbesondere als Außenkolben einer Hochdruckentladungslampe oder als Lampenkolben einer Halogenglühlampe ausgebildet.

### III. Beschreibung der bevorzugten Ausführungsbeispiele

Nachstehend wird die Erfindung anhand von bevorzugten Ausführungsbeispielen näher erläutert. Es zeigen:

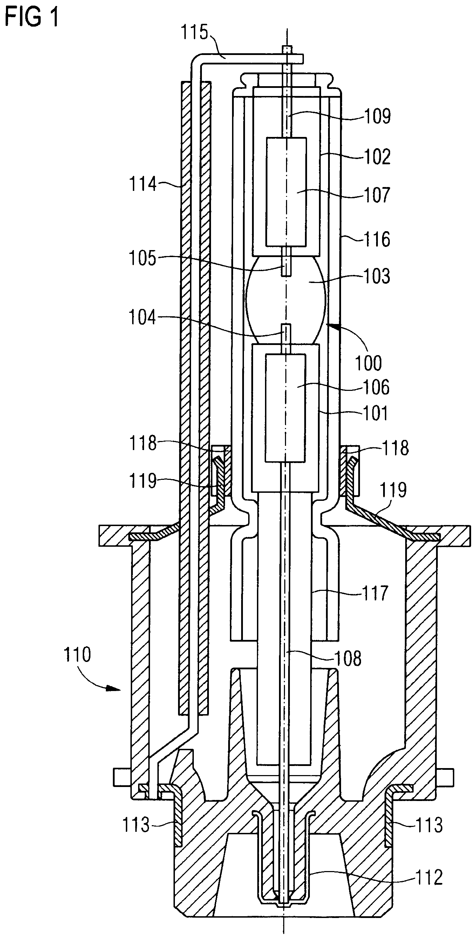

- Figur 1: Eine Seitenansicht einer Hochdruckentladungslampe mit einem erfindungsgemäß ausgebildeten Außenkolben in schematischer Darstellung
- Figur 2: Das Transmissionsspektrum des Glasartikels mit der Glaszusammensetzung gemäß dem bevorzugten Ausführungsbeispiel der Erfindung für eine Wandstärke von 1 mm
- Figur 3: Eine Darstellung des Farborts des von der in Fig. 1 abgebildeten Hochdruckentladungslampe emittierten Lichts bei Verwendung eines Außenkolbens bestehend aus Glas mit unterschiedlichen Glaszusammensetzungen

Bei dem in der Figur schematisch und teilweise geschnitten dargestellten Ausführungsbeispiel der erfindungsgemäßen Lampe handelt es sich um eine Hochdruckentladungslampe, insbesondere um eine Halogen-Metalldampf-Hochdruckentladungslampe, die vorzugsweise als Lichtquelle in einem Kraftfahrzeugscheinwerfer verwendet wird und eine elektrische Leistungsaufnahme von nominal 35 W besitzt.

Diese Lampe besitzt ein soffittenartiges Entladungsgefäß 100 aus Quarzglas mit einem gasdicht verschlossenen Innenraum bzw. Entladungsraum 103, einem sockelnahen 101 und einem sockelfernen 102 Quetschende. In den Entladungsraum 103 ragen zwei Elektroden 104, 105 hinein, die jeweils über eine im Quetschende 101 bzw. 102 gasdicht eingeschmolzene Molybdänfolie 106, 107 mit einer aus dem Quetschende 101, 102 herausgeführten Stromzuführung 108, 109 elektrisch leitend verbunden sind. Der Lampensockel weist eine aus einem Kunststoff-Spritzgussteil bestehende Sockelhülse 110 auf, in dem das Entladungsgefäß 100 und ein damit verschmolzener Außenkolben 116 verankert sind. Das vom Entladungsgefäß 100 abgewandte Ende der Sockelhülse 110 ist als Stecker mit zwei elektrischen Kontakten 112, 113 ausgebildet. Der Mittenkontakt 112 ist mit der aus dem sockelnahen Quetschende 101 herausgeführten Stromzuführung 108 elektrisch leitend verbunden, während der andere, ringförmige elektrische Kontakt 113 über eine von einem Keramikrohr 114 ummantelte Rückführung 115 elektrisch leitend mit der aus dem sockelfernen Quetschende 102 herausragenden Stromzuführung 109 verbunden ist. Das Entladungsgefäß 100 ist von einem zylindrischen, nahezu koaxial zum Entladungsgefäß 100 angeordneten Außenkolben 116 umgeben, der mit dem sockelfernen Quetschende 102 und einem sich in die Sockelhülse 110 erstreckenden, rohrförmigen Fortsatz 117 des Entladungsgefäßes 100 verschmolzen ist. Der Außenkolben 116 umhüllt das Entladungsgefäß 100, so dass der Bereich des Entladungsraumes 103 vollständig innerhalb des Außenkolbens 116 angeordnet ist. Zur Verankerung der beiden Lampengefäße 100 und 116 in der zylindrischen Sockelhülse 110 dient ein ringförmiges metallisches Halterelement 118, das mit Klemmsitz den Außenkolben 116 umschließt und vier abgewinkelte Metalllaschen 119, deren erstes Ende jeweils mit dem Halterelement 118 verschweißt ist und deren zweites Ende jeweils in dem Kunststoffmaterial der Sockelhülse 110 verankert ist.

Die in dem Entladungsraum 103 des Entladungsgefäßes 100 eingeschlossene Füllung ist quecksilberfrei ausgebildet und enthält Xenon sowie Jodide der Metalle Natrium, Scandium, Indium und Zink. Das Entladungsgefäß 100 kann auf seiner äußeren Oberfläche mit einer Zündhilfsbeschichtung (nicht abgebildet), wie in der EP 1 632 985 A1 offenbart ist, versehen sein.

Gemäß dem bevorzugten Ausführungsbeispiel der Erfindung besteht der Außenkolben 116 aus Glas, dessen Glaszusammensetzung als Hauptkomponente Siliziumdioxid (SiO₂) mit einem Gewichtsanteil von 98,0 Gewichtsprozent und die Zusatzstoffe Neodym, Aluminium, Cer, Barium, Bor, Europium und Titan in Oxidform mit einem Anteil von insgesamt 2,0 Gewichtsprozent enthält, wobei die Gewichtsanteile von Neodym, Aluminium, Cer, Barium, Bor, Europium und Titan in der Glaszusammensetzung folgende Werte haben:

| | |
|---|---|
| Neodym | 0,329 Gewichtsprozent |
| Aluminium | 0,245 Gewichtsprozent |
| Cer | 0,391 Gewichtsprozent |
| Barium | 0,370 Gewichtsprozent |
| Bor | 0,0582 Gewichtsprozent |
| Europium | 0,0864 Gewichtsprozent |
| Titan | 0,0300 Gewichtsprozent |

Aus Gründen, die schon oben erläutert wurden, ist bei den vorgenannten Werten für die Anteile der Zusatzstoffe Neodym, Aluminium, Cer, Barium, Bor, Europium und Titan in der Glaszusammensetzung der Sauerstoffanteil in der Oxidform nicht berücksichtigt. Daher ist die Summe der Gewichtsprozentwerte in vorstehender Tabelle kleiner als 2,0 Gewichtsprozent.

Der Außenkolben 116 gemäß diesem Ausführungsbeispiel der Erfindung wird aus Quarzsand (SiO₂) hergestellt, dem zur Herstellung der Glasschmelze 0,5 Gewichtsprozent Neodymaluminat (NdAlO₃), 0,15 Gewichtsprozent Aluminiumoxid (Al₂O₃), 0,6 Gewichtsprozent Ceraluminat (CeAlO₃), 0,6 Gewichtsprozent Bariummetaborat (BaB₂O₄), 0,1 Gewichtsprozent Europiumoxid (Eu₂O₃) und 0,05 Gewichtsprozent Titandioxid (TiO₂) zugesetzt wurden. Ein Glühprozess ist bei dieser Glaszusammensetzung nicht erforderlich, da die Transmission des Glases im ultravioletten Spektralbereich von 200 nm bis 280 nm durch den Zusatz von Europium in Oxidform schon stark reduziert ist.

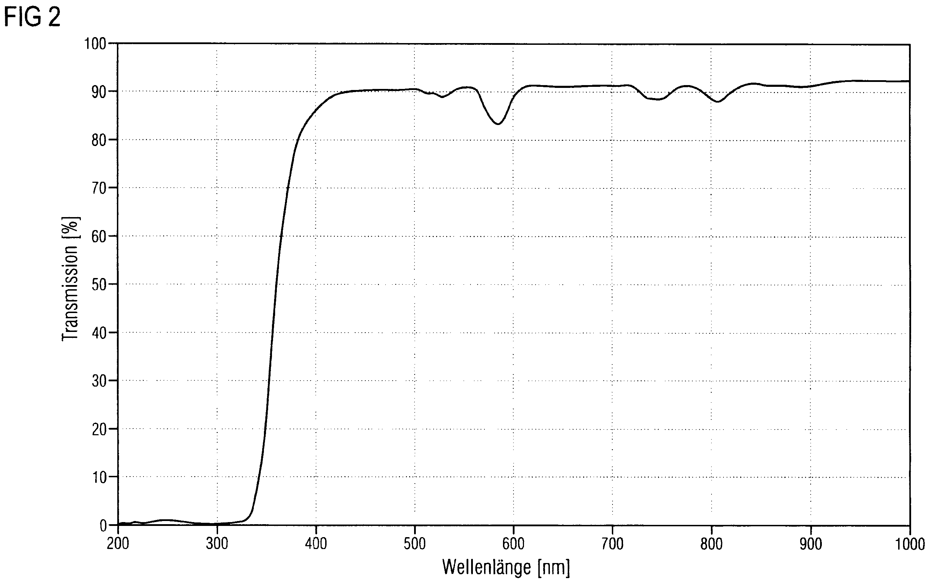

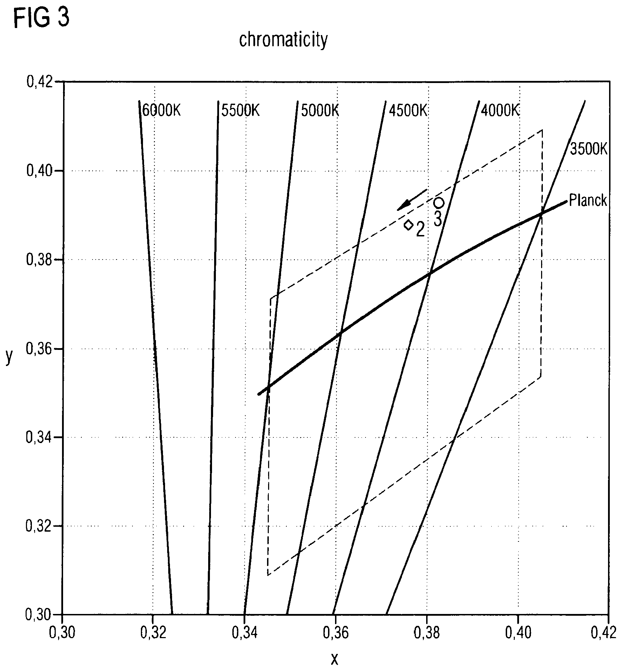

Die Transmission der Glaszusammensetzung des Außenkolbens 116 gemäß dem bevorzugten Ausführungsbeispiel der Erfindung ist für eine Wandstärke von 1 mm in Figur 2 dargestellt. Die Transmission ist auf der vertikalen Achse in Prozent der auf das Glas auftreffenden Menge an elektromagnetischer Strahlung in Abhängigkeit von der Wellenlänge der auftreffenden elektromagnetischen Strahlung dargestellt. Die Wellenlänge ist auf der horizontalen Achse in der Einheit Nanometer aufgetragen. Im Spektralbereich des sichtbaren Lichts besitzt das Glas eine hohe Transmission von nahezu 90% mit Ausnahmen im Spektralbereich des gelben Lichts, bei ca. 582 nm, und des roten Lichts, bei ca. 744 nm. Dadurch wird die Farbtemperatur des von der Hochdruckentladungslampe gemäß dem bevorzugten Ausführungsbeispiel der Erfindung emittierten weißen Lichts gegenüber einem aus undotiertem Quarzglas bestehenden Außenkolben um ca. 150 Kelvin auf ca. 4220 Kelvin erhöht. In Figur 3 ist der Farbort des von der Hochdruckentladungslampe emittierten weißen Lichts mittels der Farbkoordinaten x, y entsprechend der Normfarbtafel gemäß CIE 1931 und DIN 5033 durch eine Raute 2 dargestellt. Die nahezu vertikal verlaufenden Linien in dem Diagramm der Figur 3 geben Farborte mit konstanter Farbtemperatur für die Farbtemperaturwerte im Bereich von 3500 Kelvin bis 6000 Kelvin in Abständen von 500 Kelvin an. Zusätzlich sind in Fig. 3 die Farbarten des sogenannten Schwarzen (Planckschen) Strahlers durch die mit "Planck" bezeichnete Kurve dargestellt. Die Hochdruckentladungslampe mit dem Außenkolben aus undotiertem Quarzglas emittiert weißes Licht mit einer Farbtemperatur von ca. 4070 Kelvin, entsprechend dem durch den Kreis 3 dargestellten Messpunkt. Die Hochdruckentladungslampe mit dem Außenkolben 116 aus Glas mit der Glaszusammensetzung gemäß dem bevorzugten Ausführungsbeispiel der Erfindung emittiert weißes Licht mit einer Farbtemperatur von ca. 4220 Kelvin, entsprechend dem durch die Raute 2 dargestellten Messpunkt.

Aufgrund seines sehr hohen Anteils an Siliziumdioxid (SiO₂) kann der erfindungsgemäße Glasartikel und insbesondere auch das Glas mit der Glaszusammensetzung gemäß den beiden Ausführungsbeispielen als dotiertes Quarzglas bezeichnet werden, zumal der erfindungsgemäße Glasartikel aus Quarzsand oder Bergkristall unter Zugabe der oben genannten Zusatzstoffe in Oxidform erschmolzen wird.

## Patentansprüche

1. Glasartikel, der als Außenkolben (116) einer Hochdruckentladungslampe ausgebildet ist, wobei der Außenkolben (116) ein Entladungsgefäß (100) der Hochdruckentladungslampe umgibt, und der Glasartikel eine Glaszusammensetzung aufweist, die als Hauptkomponente Siliziumdioxid (SiO₂) mit einem Anteil von mindestens 96 Gewichtsprozent und als Zusatzstoffe Neodym, Aluminium, Cer, Barium und Bor sowie Europium in Oxidform enthält, wobei
- der Anteil von Neodym in der Glaszusammensetzung im Bereich von 0,06 bis 1,40 Gewichtsprozent liegt,
- der Anteil von Aluminium in der Glaszusammensetzung im Bereich von 0,09 bis 1,20 Gewichtsprozent liegt,
- der Anteil von Cer in der Glaszusammensetzung im Bereich von 0,06 bis 1,30 Gewichtsprozent liegt,
- der Anteil von Barium in der Glaszusammensetzung im Bereich von 0,006 bis 1,30 Gewichtsprozent liegt,
- der Anteil von Bor in der Glaszusammensetzung im Bereich von 0,0009 bis 0,20 Gewichtsprozent liegt, und
- der Anteil von Europium in der Glaszusammensetzung im Bereich von 0,008 bis 0,44 Gewichtsprozent liegt, wobei
- jeweils bei der Angabe des Wertes für den Gewichtsanteil des Zusatzstoffs der Sauerstoffanteil der Oxidform nicht berücksichtigt ist.

2. Glasartikel nach Anspruch 1, wobei die Glaszusammensetzung zusätzlich Titan in Oxidform enthält.

3. Glasartikel nach Anspruch 2, wobei der Anteil von Titan in der Glaszusammensetzung im Bereich von 0,006 bis 0,06 Gewichtsprozent liegt.

## Claims

1. Glass article which is configured as outer bulb (116) of a high-pressure discharge lamp, wherein the outer bulb (116) surrounds a discharge vessel (100) of the high-pressure discharge lamp and the glass article has a glass composition which contains silicon dioxide (SiO₂) in a proportion of at least 96 per cent by weight as main component and neodymium, aluminium, cerium, barium and boron and also europium in oxide form as additives, wherein
- the proportion of neodymium in the glass composition is in the range from 0.06 to 1.40 per cent by weight,
- the proportion of aluminium in the glass composition is in the range from 0.09 to 1.20 per cent by weight,
- the proportion of cerium in the glass composition is in the range from 0.06 to 1.30 per cent by weight,
- the proportion of barium in the glass composition is in the range from 0.006 to 1.30 per cent by weight,
- the proportion of boron in the glass composition is in the range from 0.0009 to 0.20 per cent by weight and
- the proportion of europium in the glass composition is in the range from 0.008 to 0.44 per cent by weight, where
- the oxygen component of the oxide form is in each case not taken into account in the value indicated for the proportion by weight of the additive.

2. Glass article according to Claim 1, wherein the glass composition additionally contains titanium in oxide form.

3. Glass article according to Claim 2, wherein the proportion of titanium in the glass composition is in the range from 0.006 to 0.06 per cent by weight.

## Revendications

1. Article en verre qui est réalisé sous la forme d'une ampoule externe (116) d'une lampe à décharge haute pression, dans lequel l'ampoule externe (116) entoure une enceinte à décharge (100) de la lampe à décharge haute pression, et l'article en verre présente d'une composition du verre qui contient, à titre de composant principal, du dioxyde de silicium (SiO₂) avec une fraction d'au moins 96 % en poids et, à titre d'additifs, du néodyme, de l'aluminium, du cérium, du baryum et du bore, ainsi que de l'europium sous la forme d'oxyde, dans lequel
- la fraction du néodyme dans la composition du verre se situe dans la plage de 0,06 à 1,40 % en poids ;
- la fraction de l'aluminium dans la composition du verre se situe dans la plage de 0,09 à 1,20 % en poids ;
- la fraction du cérium dans la composition du verre se situe dans la plage de 0,06 à 1,30 % en poids ;
- la fraction du baryum dans la composition du verre se situe dans la plage de 0,006 à 1,30 % en poids ;
- la fraction du bore dans la composition du verre se situe dans la plage de 0,0009 à 0,20 % en poids ; et
- la fraction de l'europium dans la composition du verre se situe dans la plage de 0,008 à 0,44 % en poids ; dans lequel
- respectivement, en ce qui concerne l'indication de la valeur pour la fraction pondérale de l'additif, on ne prend pas en compte la fraction d'oxygène de la forme d'oxyde.

2. Article en verre selon la revendication 1, dans lequel la composition du verre contient en outre du titane sous la forme d'oxyde.

3. Article en verre selon la revendication 2, dans lequel la fraction du titane dans la composition du verre se situe dans la plage de 0,006 à 0,06 % en poids.
